# EUROPÄISCHE PATENTSCHRIFT

(11) **EP 0 625 272 B1**
(45) Veröffentlichungstag und Bekanntmachung des Hinweises auf die Patenterteilung: **01.04.1998**
(21) Anmeldenummer: 94900754.6
(22) Anmeldetag: 04.12.1993
(51) Int. Cl.: G02B 6/42, G02B 6/12

(54) **VERFAHREN ZUM HERSTELLEN EINES DECKELS FÜR EINE INTEGRIERT OPTISCHE SCHALTUNG**
METHOD OF PRODUCING A COVER FOR AN INTEGRATED OPTICAL CIRCUIT
PROCEDE POUR LA FABRICATION D'UN COUVERCLE POUR UN CIRCUIT OPTIQUE INTEGRE

(30) Priorität: 07.12.1992 DE 4240950
(43) Veröffentlichungstag der Anmeldung: 23.11.1994
(73) Patentinhaber: ROBERT BOSCH GMBH, 70442 Stuttgart (DE)
(72) Erfinder: KRAGL, Hans, D-64372 Ober-Ramstadt (DE)
(86) Internationale Anmeldenummer: DE9301157
(87) Internationale Veröffentlichungsnummer: WO9414093

(56) Entgegenhaltungen:
- EP-A- 0 495 559
- ELECTRONICS LETTERS Bd. 27, Nr. 5 , 28. Februar 1991 , ENAGE GB Seiten 410 - 412 W.K.CHAN ET AL. 'CHANNEL GLASS WAVEGUIDE DETECTORS WITH GRAFTED GaAs FILM INEMBEDDED CONFIGURATION' in der Anmeldung erwähnt
- PATENT ABSTRACTS OF JAPAN vol. 14, no. 358 (P-1087)(4301) 2. August 1990 & JP,A,02 131 202 (OMRON TATEISI ELECTRON) 21. Mai 1990
- PATENT ABSTRACTS OF JAPAN vol. 008, no. 248 (P-313)14. November 1984 & JP,A,59 121 008 (TOUKIYOU KOGYO DAIGAKU) 12. Juli 1984

## Beschreibung

### Stand der Technik

Die Erfindung geht aus von einem Verfahren zum Herstellen eines Deckels für eine integriert optische Schaltung nach der Gattung des Hauptanspruchs.

Aus der Patentanmeldung DE-P 42 12 208.2 ist bereits ein Verfahren zur Herstellung optischer Polymer-Bauelemente mit integrierter Faser-Chip-Kopplung in Abformtechnik bekannt. Dabei wird zur Einkopplung einer integriert optischen Schaltung zwischen zwei Glasfasern ein Polymer-Substrat mittels einer Masterstruktur so geformt, daß die Glasfasern in einer V-förmigen Nut im Substrat zu liegen kommen. Ihre Längsachse fluchtet dabei mit der Längsachse eines im Substrat zwischen den V-förmigen Nuten angeordneten Lichtwellenleitergrabens. Durch Auffüllen der Nuten und des Lichtwellenleitergrabens mit Polymer-Klebstoff wird mit dem Auflegen eines Polymer-Deckels sowohl eine mechanisch feste Verbindung von Substrat und Deckel als auch eine optische Kopplung der Glasfasern an den aus dem Polymer-Klebstoff gebildeten Lichtwellenleiter gewährleistet.

Des weiteren ist aus dem Artikel "Channel glass wave guide detectors with grafted GaAs film in embedded configuration" in Electronic Letters 27 (1991), Seiten 410 bis 412 von Chan, Yi-Yan, et al. bekannt, auf einem Glas-Substrat einen aufgepfropften Photodetektor an einen im Substrat befindlichen Lichtwellenleiter evaneszent anzukoppeln. Dieses Herstellungsverfahren erfordert eine präzise Justage des Wellenleiters und des Photodetektors zueinander, die für jedes Bauteil individuell durchgeführt werden muß und ein kompliziertes Justierverfahren beinhaltet.

### Vorteile der Erfindung

Das erfindungsgemäße Verfahren mit den kennzeichnenden Merkmalen des Hauptanspruches hat demgegenüber den Vorteil, daß ein Deckel für eine integriert optische Schaltung ohne Justieraufwand hergestellt wird. Weiter besteht der Vorteil, daß das erfindungsgemäße Verfahren besonders für die Massenfertigung geeignet ist, da die Lage des optischen Bauelements bezüglich des Formstempels auch bei fertigungsbedingten Toleranzen festliegt oder sich ohne weiteres ergibt. Weiterhin besteht ein Vorteil des Verfahrens darin, ein optisches Bauelement in bezug auf Faserführungsnuten für die Aufnahme von Lichtwellenleitern zu justieren, obwohl das optische Bauelement in den Abmessungen kleiner ist, als der Abstand der für die spätere Aufnahme von Lichtleitern vorgesehenen Führungsnasen.

Durch die in den Unteransprüchen genannten Maßnahmen sind vorteilhafte Weiterbildungen und Verbesserungen des in dem Hauptanspruch angegebenen Verfahrens möglich.

Die Genauigkeit der Justierung des optischen Bauelementes in dem Formstempel wird erhöht, indem mindestens eine Justiereinrichtung auf dem Formstempel angeordnet ist, die das optische Bauelement an mindestens einer Seite justiert.

Eine vorteilhafte Anordnung besteht darin, zwei Justiereinrichtungen auf dem Formstempel anzuordnen, die das optische Bauelement an gegenüberliegenden Seiten begrenzen.

Der Justiervorgang beim Auflegen des optischen Bauelementes auf den Formstempel wird vereinfacht, indem die dem optischen Bauelement zugewandten Seiten der Justiereinrichtungen abgeschrägt sind und die entsprechenden Seitenflächen des optischen Bauelementes zumindestens teilweise abgeschrägt sind. Dadurch wird die für die automatische Justierung des optischen Bauelementes auf dem Formstempel zulässige Toleranz der Bauelementabmessungen erhöht und der Justiervorgang vereinfacht.

Das Verfahren wird verbessert, indem Formstempel verwendet werden, die Entlastungsnasen aufweisen. Der beim Auflegen des optischen Bauelementes auf das optische Bauelement aufgebrachte Druck wird von den Entlastungsnasen gleichmäßig aufgenommen. Dadurch wird erreicht, daß vor allem optische Bauelemente aus spröden Materialien insbesondere Indiumphosphid oder Galiumarsenid beim Auflegen auf den Formstempel nicht beschädigt werden. Das Herstellungsverfahren eignet sich besonders für die Verbindung von Fotodetektoren mit integriert optischen Wellenleitern, da hier eine besonders exakte Justierung erforderlich ist, welche durch das erfindungsgemäße Verfahren auf einfache Art und Weise realisiert wird.

Der Deckel ist besonders einfach nach einem der genannten Verfahren herstellbar und eignet sich besonders für die Anwendung in einer integriert optischen Schaltung, wobei der Lichtwellenleiter in vorteilhafter Weise bei der Verbindung des Deckels mit einem Substrat durch den Kleber, welcher eine Nut im Substrat füllt, gebildet wird. Die entsprechend Anspruch 1 hergestellte integriert optische Schaltung bietet den Vorteil, daß die Verbindung von Substrat und Deckel und die Ankopplung von Wellenleitern in einem Schritt erfolgt. Die Herstellung ist preiswert auszuführen.

### Zeichnung

Ausführungsbeispiele der Erfindung sind in der Zeichnung dargestellt und in der nachfolgenden Beschreibung näher erläutert. Es zeigen: Figur 1 das optische Bauelement, Figur 2 einen Formstempel 2 und Figur 3 einen Deckel.

### Beschreibung der Ausführungsbeispiele

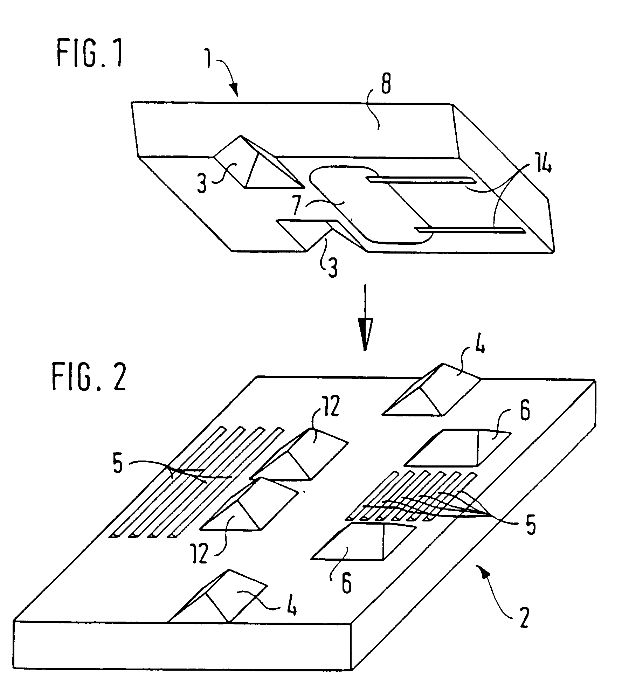

Figur 1 zeigt das optische Bauelement 1, das in diesem gewählten Beispiel aus einem Fotodetektor, der aus Indium-Phosphid hergestellt wurde, besteht. In den Fotodetektor sind zwei Nuten 3 eingebracht. Die Nuten 3 sind in einer Flucht angeordnet und laufen parallel zu der Detektorzone 7. An die Detektorzone 7 sind elektrische Zuführungen 14 von der Außenkante des optischen Bauelementes 1 geführt. Die Nuten 3 sind in diesem Beispiel vorzugsweise als V-förmige Nuten ausgebildet. Die Nuten 3 sind zueinander gefluchtet und führen von den Außenkanten des optischen Bauelementes 1 jeweils ein Stück in das optische Bauelement 1 hinein.

In einer besonders einfachen Ausführung weist das optische Bauelement 1 nur eine Ausnehmung 3 auf, die vorzugsweise als Nut ausgebildet ist. Die Lage und Form der Ausnehmung ist entsprechend der Funktion der Ausnehmung und dem Aufbau des optischen Bauelementes zu wählen.

Figur 2 zeigt einen Formstempel 2, der Führungsnasen 4, Nasen 12, Justiereinrichtungen 6 und Entlastungsnuten 5 aufweist. Die Führungsnasen 4 führen von den Außenkanten des Formstempels 2 ein Stück in die Fläche des Formstempels 2 hinein. Die Führungsnasen 4 sind vorzugsweise im rechten Winkel zu den Außenkanten des Formstempels 2 angeordnet. Die Länge der Führungsnasen 4 wird dadurch bestimmt, daß die von den Führungsnasen 4 abgeformten Führungsnuten 11, die hier vorzugsweise V-förmig ausgebildet sind, zur Aufnahme von Lichtwellenleitern verwendet werden. Die Führungsnasen 4 sind weiterhin in einer Flucht angeordnet. Die Entlastungsnasen 5 verlaufen in diesem Anwendungsbeispiel parallel zu der Flucht der Führungsnasen 4 und sind über die gesamte Fläche des Formstempels 2, bis auf den Bereich zwischen den Führungsnasen 4, angeordnet. Die Entlastungsnasen 5 sind in diesem Beispiel vorzugsweise V-förmig ausgebildet. Die Größenverhältnisse der Entlastungsnasen 5 und der Führungsnuten 4 sind nicht maßstabsgetreu dargestellt, da die Höhe der Führungsnuten 4 in der Größenordnung von 80 Mikrometern liegt und die Höhe der Entlastungsnasen 5 im Bereich um 5 Mikrometer liegt. Die Höhe und Breite der Nuten 3 und der Führungsnasen 4 sind in der Figur 1 ebenfalls nicht maßstabsgetreu dargestellt. Die Nuten 3 und die Nasen 12 sind in ihrer Form so ausgebildet, daß sie aneinander angepaßt sind und eine präzise Justierung des optischen Bauelementes 1 in bezug auf die Flucht der Führungsnasen 4 erlauben, d.h., daß das optische Bauelement 1 sowohl lateral als auch vertikal präzise zum Formstempel 2 justiert ist.

Weiterhin sind parallel zu der Flucht der Führungsnasen 4 zwei gefluchtete Nasen 12 zwischen dem Bereich der Führungsnasen 4 angeordnet. Der Formstempel 2 weist weiterhin zwei Justiereinrichtungen 6 auf, die in senkrechter Richtung zur Flucht der Führungsnasen 4 und seitlich versetzt parallel zueinander angeordnet sind. Zwischen den Justiereinrichtungen 6 sind weitere Entlastungsnasen 5 in diesem Beispiel parallel zur Flucht der Führungsnasen 4 angebracht. Die Nasen 12 sind von gleicher Größenordnung wie die Führungsnasen 4, d.h. ungefähr 80 Mikrometer hoch. Die Nasen 12 und die Justiereinrichtungen 6 sind in diesem gewählten Beispiel V-förmig ausgebildet. Der Formstempel 2 besteht vorzugsweise aus einem Metall, das galvanisch von einer Siliziumform abgeformt wird. In diesem Ausführungsbeispiel wurde als Metall Nickel gewählt.

In einer einfachen Ausgestaltung weist der Formstempel 2 außer mindestens einer Führungsnase 4 nur eine Nase 12 auf. Entsprechend weist auch das optische Bauelement 1 nur eine Nut 3 auf. Die Lage der Nase 12 ist der Lage der Nut 3 angepaßt. Sind mehrere Nasen 12 angeordnet, so ist deren Lage entsprechend der Lage der entsprechenden Nuten 3 wählbar.

In einer erweiterten Ausführung weist der Formstempel 2 neben mindestens einer Führungsnase 4 und mindestens einer Nase 12 noch mindestens eine Justiereinrichtung 6 auf. Die Lage und Form der Justiereinrichtung 6 ist entsprechend der Funktion der Justiereinrichtung 6 und der Form des optischen Bauelementes 1 zu wählen. Die geometrische Form des optischen Bauelementes 1 bestimmt die Form der Justiereinrichtung 6.

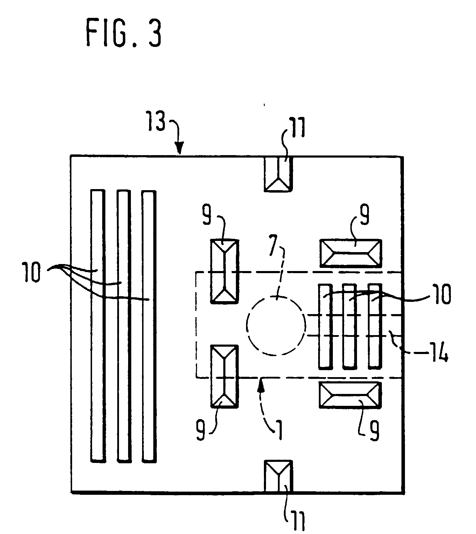

Figur 3 zeigt einen Deckel 13, der mit dem in Figur 2 dargestellten Formstempel 2 hergestellt worden ist. Der Deckel 13 weist Ausnehmungen 9 auf. Die Ausnehmungen 9, die parallel seitlich versetzt zu der Flucht der Führungsnuten 11 und zwischen den Führungsnuten 11 angeordnet sind, wurden von den Nasen 12 des Formstempels 2 abgeformt.

Die Ausnehmungen 9, die senkrecht zu der Flucht der Führungsnuten 11 und parallel zueinander über den Randbereichen des optischen Bauelementes 1 angeordnet sind, wurden von den Justiereinrichtungen 6 des Formstempels 2 abgeformt. Die Lage und Orientierung des umformten optischen Bauelementes 1 ist skizziert dargestellt. Die Führungsnuten 11, die Ausnehmungen 9 und die Vertiefungen 10 sind in diesem gewählten Beispiel in Polymer eingeprägt.

Die Herstellung des Deckels 13 für eine integriert optische Schaltung wird anhand der Figuren 1 bis 3 erläutert.

Ein Deckel 13 für eine integrierte optische Schaltung mit einem optischen Bauelement 1, das auf Führungsnuten 11 für Lichtwellenleiter bei der Herstellung des Deckels automatisch justiert wird, wird mit einem Formstempel 2, wie in Figur 2 dargestellt, hergestellt. Das optisches Bauelement 1 ist, wie in Figur 1 dargestellt, in den Abmessungen kleiner als die Abstände der Führungsnasen 4 des Formstempels 2. Um die laterale und vertikale Justierung des optischen Bauelementes 1 trotzdem zu ermöglichen, sind auf dem Formstempel 2 Justiereinrichtungen 6 und Nasen 12 ausgebildet. Die Nasen 12 sind in einer Flucht und parallel seitlich versetzt zur Flucht der Führungsnasen 4 angeordnet. Das in Figur 1 dargestellte optische Bauelement 1 weist Nuten 3 auf, die in einer Flucht angeordnet sind. Die Justiereinrichtungen 6 weisen an den Seiten, die dem optischen Bauelement 1 beim Auflegen des optischen Bauelementes 1 zugewandt sind, abgeschrägte Seitenflächen auf. In diesem gewählten Beispiel sind die Justiereinrichtungen 6 als V-förmige Nasen ausgebildet. Zwischen den Justiereinrichtungen 6 sind auf dem Formstempel 2 drei Entlastungsnasen 5 parallel zu der Flucht der Führungsnasen 4 angeordnet. Der Formstempel 2 weist weitere parallel zu der Flucht der Führungsnasen 4 angeordnete Entlastungsnasen 5 in dem Bereich des Formstempels 2 auf, der beim Auflegen des optischen Bauelementes 1 auf den Formstempel 2 bedeckt wird. In der Flucht zwischen den Führungsnasen 4 sind keine Justiereinrichtungen 6 oder Entlastungsnasen 5 angeordnet. Beim Auflegen des optischen Bauelementes 1 auf den Formstempel 2 rasten die Nasen 12 in die Nuten 3 ein. Damit wird die laterale Position des optischen Bauelementes 1 in bezug auf die Flucht der Führungsnasen 4 festgelegt. Gleichzeitig wird die vertikale Position durch die Höhendifferenz der Nasen 12 und der Nuten 3 festgelegt. Weiterhin wird das optische Bauelement 1 von den Justiereinrichtungen 6 entlang der lateralen Außenkanten 8 des optischen Bauelementes 1 aufgenommen und so eine Drehung oder eine Verkippung des optischen Bauelementes 1 beim Auflegen verhindert. Da das Auflegen des optischen Bauelementes 1 mit Druck erfolgt und viele für die Herstellung optischer Bauelemente verwendete Materialien, wie z. B. Indiumphosphid, sehr spröde sind, muß ein Durchbiegen und eine Beschädigung des optischen Bauelementes verhindert werden. Dies wird dadurch erreicht, daß das optische Bauelement 1 auf einem Großteil seiner gesamten Fläche auf den Entlastungsnasen 5 des Formstempels 2 aufliegt. Das optische Bauelement 1 liegt nun mit den Nuten 3 auf den Nasen 12 und auf den Entlastungsnasen 5 auf. Zur besseren Einbringung des optischen Bauelementes 1 zwischen die Justiereinrichtungen 6 sind die lateralen Außenkanten des optischen Bauelementes 1 zumindestens teilweise abgeschrägt. Dadurch können die lateralen Außenkanten 8 und die abgeschrägten Seitenflächen der Justiereinrichtungen 6 beim Auflegen gegeneinander gleiten. Dadurch wird der zur Positionierung notwendige Druck verringert und die Toleranzen für das optische Bauelement 1 in bezug auf den Abstand der Justiereinrichtungen 6 erhöht. Bei diesem Verfahren werden die Kontaktdrähte 14, die von der Außenkante, wie in Figur 1 dargestellt, zu der aktiven Zone 7 des optischen Bauelementes 1 führen, nicht mit einem Polymer vollständig bedeckt. Dies hat zur Folge, daß die elektrischen Zuführungen 14 kontaktiert werden können, ohne das Polymer entfernen zu müssen bzw. das Polymer am Rand problemlos entfernt werden kann, um die Kontaktierung herstellen zu können.

Das Bauelement 1 wird zur Herstellung des Deckels 13 auf den Formstempel 2 gelegt. Um sicher zu stellen, daß das Polymer in alle Bereiche zwischen dem Bauelement 1 und dem Formstempel 2 gelangt, wird das Bauelement 1 vor dem Auflegen auf den Formstempel 2 mit flüssigem Polymer benetzt. Anschließend wird das positionierte optische Bauelement 1 und der Formstempel 2 von einer aushärtbaren Flüssigkeit, in diesem Beispiel ein Flüssig-Polymer, umgossen. Nach der Aushärtezeit des Flüssig-Polymer wird der Formstempel 2 entfernt und es wird ein Deckel 13, wie in Figur 3 dargestellt, erhalten. Dieser Deckel 13 weist nun Vertiefungen 10, die von den Entlastungsnasen 5 abgeformt wurden, Ausnehmungen 9, die von den Nasen 12 und den Justiereinrichtungen 6 abgeformt wurden und Führungsnuten 11, die von den Führungsnasen 4 abgeformt wurden, auf. Die aktive Zone 7 des optischen Bauelementes 1 ist, wie in Figur 3 dargestellt, in bezug auf die Flucht der Führungsnuten 11 justiert. Zur Herstellung einer integrierten optischen Schaltung wird ein Substrat, das wenigstens zwei, vorzugsweise V-förmige Nuten aufweist, verwendet. Der Abstand, die Größe und die Orientierung der V-förmigen Nuten entspricht den der Führungsnuten 11 des Deckels 13. Zwischen den zwei V-förmigen Nuten ist eine weitere Nut angeordnet. Die integriert optische Schaltung wird mit einem transparenten Kleber bedeckt, wobei die zwischen den V-förmigen Nuten liegende weitere Nut aufgefüllt wird und so einen Lichtwellenleiter bildet. In die zwei V-förmigen Nuten wird jeweils ein Lichtleiter, insbesondere Lichtfasern, eingelegt. Die V-förmigen Nuten, in die die Lichtleiter eingelegt sind, werden ebenfalls mit dem transparenten Kleber bedeckt. Der Deckel 13 wird so auf die integriert optische Schaltung aufgelegt, daß die Lichtleiter ebenfalls von den Führungsnuten 11 aufgenommen werden. Der Deckel 13 wird so fest aufgepreßt, daß nur eine dünne Schicht transparenten Klebers zwischen der integriert optischen Schaltung und dem Deckel 13 zurückbleibt. Dabei werden auch die Ausnehmungen 9 und Vertiefungen 10 mit dem transparenten Kleber aufgefüllt. Auf diese Weise wird eine integriert optische Schaltung hergestellt, bei der ein optisches Bauelement 1, das sich in einem Deckel 13 befin- det, beim Aufkleben des Deckels 13 automatisch auf den von der mit Kleber aufgefüllten und zwischen den V-förmigen Nuten liegenden Lichtwellenleiter justiert wird, wobei der Lichtwellenleiter durch Auffüllen der weiteren Nut mit Kleber gebildet wird.

Das beschriebene Herstellungsverfahren ist in Analogie auch auf Formstempel 2 anzuwenden, die nur mindestens eine Führungsnase 4 und mindestens eine Nase 12 oder mindestens eine Führungsnase 4 und mindestens eine Nase 12 und mindestens eine Justiereinrichtung 6 aufweisen.

Für eine einfache Justierung des optischen Bauelementes 1 ist es ausreichend, daß das optische Bauelement 1 nur durch mindestens eine Nase 12 justiert wird.

Eine genauere Justierung wird erreicht, wenn der Formstempel 2 außer der Nase 12 noch mindestens eine Justiereinrichtung 6 aufweist, die das optische Bauelement an einer Außenseite justiert.

## Patentansprüche

1. Verfahren zur Herstellung einer integriert-optischen Schaltung aus einem Substrat mit einem integrierten Lichtwellenleiter und einem Deckel, gekennzeichnet durch folgende Verfahrensschritte:
a) Bereitstellen eines optischen Bauelements, das in seiner Oberfläche V-förmige Nuten (3) und eine aktive Zone aufweist,
b) Bereitstellen eines Formstempels (2), der mindestens eine prismenförmige Führungsnase (4) und mindestens eine weitere prismenförmige Erhebung (12) aufweist, die derart ausgebildet ist, daß sie in eine der V-Nuten (3) eingreifen kann,
c) Auflegen des optischen Bauelements auf den Formstempel, derart daß die prismenförmige Erhebung (12) in die V-Nut (3) eingreift,
wobei die Führungsnase (4) und die prismenförmige Erhebung (12) des Formstempels derart ausgebildet sind, daß die aktive Zone des Bauelements (1) nach dem Auflegen mit der Führungsnase (4) fluchtet,
d) Umgießen des optischen Bauelements mit einer aushärtbaren Masse, wobei der Deckel der integriert optischen Schaltung entsteht,
e) Entformen des Deckels (13) von dem Formstempel,
f) Aufsetzen des Deckels (13) auf das Substrat, das Nuten zur Aufnahme von Lichtwellenleitern aufweist, derart, daß die im Deckel durch die Abformung der Führungsnasen (4) erzeugten Ausnehmungen (11) mit den Aufnahmenuten des Substrats zusammenwirkend eine Lichtleitfaser aufnehmen können, und
g) Verkleben von Substrat und Deckel (13).

2. Verfahren nach Anspruch 1, dadurch gekennzeichnet, daß der Formstempel (2) mit mindestens einer Justiereinrichtung (6) versehen wird, und daß beim Einlegen das optische Bauelement (1) an einer Seite von der Justiereinrichtung (6) justiert wird.

3. Verfahren nach Anspruch 2, dadurch gekennzeichnet, daß der Formstempel mit zwei Justiereinrichtungen (6) versehen wird, und daß das optische Bauelement (1) beim Einlegen an gegenüberliegenden Seiten von den Justiereinrichtungen (6) zentriert wird.

4. Verfahren nach Anspruch 1 bis 3, dadurch gekennzeichnet, daß die dem optischen Bauelement (1) zugewandten Seiten der Justiereinrichtungen (6) abgeschrägt werden, und daß die entsprechende Seitenflächen des optischen Bauelements (1) zumindest teilweise abgeschrägt werden.

5. Verfahren nach einem der Ansprüche 1 bis 4, dadurch gekennzeichnet, daß der Formstempel (2) mit Entlastungsnasen (5) versehen wird, durch die der beim Auflegen des optischen Bauelementes (1) auf das optische Bauelement (1) aufgebrachte Druck aufgenommen wird.

## Claims

1. Method for producing an integrated optical circuit from a substrate with an integrated optical waveguide and a cover, characterized by the following method steps:
a) provision of an optical component which has, in its surface, V-shaped grooves (3) and an active zone,
b) provision of a mould punch (2) which has at least one prism-shaped guiding lug (4) and at least one further prism-shaped elevation (12), which is designed in such a way that it can engage in one of the V-grooves (3),
c) emplacement of the optical component onto the mould punch, in such a way that the prism-shaped elevation (12) engages in the V-groove (3),
the guiding lug (4) and the prism-shaped elevation (12) of the mould punch being designed in such a way that the active zone of the component (1) is aligned with the guiding lug (4) after emplacement,
d) casting of a curable compound around the optical component, the cover of the integrated optical circuit being produced,
e) release of the cover (13) from the mould punch,
f) emplacement of the cover (13) onto the substrate, which has grooves for receiving optical waveguides, in such a way that the cutouts (11), which are produced in the cover by the impression of the guiding lugs (4), can, in interaction with the accommodating grooves in the substrate, accommodate an optical fibre, and
g) adhesive bonding of substrate and cover (13).

2. Method according to Claim 1, characterized in that the mould punch (2) is provided with at least one alignment device (6), and in that, during insertion, the optical component (1) is aligned on one side by the alignment device (6).

3. Method according to Claim 2, characterized in that the mould punch is provided with two alignment devices (6), and in that the optical component (1) is centred, during insertion, on opposite sides by the alignment devices (6).

4. Method according to Claims 1 to 3, characterized in that those sides of the alignment devices (6) which face the optical component (1) are bevelled, and in that the corresponding side faces of the optical component (1) are at least partially bevelled.

5. Method according to one of Claims 1 to 4, characterized in that the mould punch (2) is provided with load-relieving lugs (5), by means of which the pressure which is applied to the optical component (1) during emplacement of the optical component (1) is taken up.

## Revendications

1. Procédé de fabrication d'un circuit optique intégré sur un support avec un guide de lumière intégré à un couvercle, caractérisé par les étapes suivantes :
a) on fournit un composant optique dont la surface comporte des rainures en forme de V et une zone active,
b) on fournit un poinçon de moulage (2) ayant au moins un bec de guidage (4) en forme de prisme et au moins un autre bossage (12) en forme de prisme qui sont réalisés pour pouvoir pénétrer dans l'une des rainures à section en V (3),
c) on applique le composant optique sur le poinçon de moulage pour que le bossage prismatique (12) pénètre dans la rainure à section en V (3),
le bec de guidage (4) et le bossage (12) prismatique du poinçon de moulage étant réalisés pour que la zone active du composant (1) soit alignée avec le bec de guidage (4) lors de l'application,
d) on enrobe le composant optique avec une masse durcissable formant le couvercle du circuit optique intégré,
e) on démoule le couvercle (13) par rapport au poinçon de moulage,
f) on applique le couvercle (13) sur le support qui comporte des rainures pour recevoir le guide de lumière de façon que les cavités (11) formées par moulage des becs de guidage (4) coopèrent avec les rainures de réception du support pour recevoir une fibre optique et,
g) on colle le support et le couvercle (13).

2. Procédé selon la revendication 1,
caractérisé en ce que
le poinçon de moulage (2) est muni d'au moins une installation d'ajustage (6) et, lors de la mise en place, le composant optique (1) est ajusté sur un côté de l'installation d'ajustage (6).

3. Procédé selon la revendication 2,
caractérisé en ce que
le poinçon de moulage est muni de deux installations d'ajustage (6) et le composant optique (1) est centré par les installations d'ajustage (6) lors de la mise ne place par rapport aux côtés opposés.

4. Procédé selon les revendications 1 à 3,
caractérisé en ce que
les côtés des installations d'ajustage (6) tournés vers le composant optique (1) sont coupés en biais et les surfaces latérales correspondantes du composant optique (1) sont au moins en partie en biais.

5. Procédé selon l'une des revendications 1 à 4,
caractérisé en ce que
le poinçon de moulage (2) est muni de becs de décharge (5) qui, lorsqu'on applique le composant optique (1) reprend la pression exercée sur le composant optique (1).
